(19) Europäisches Patentamt
European Patent Office
Office européen des brevets

(11) EP 0 840 155 B1

(12) # EUROPÄISCHE PATENTSCHRIFT

(45) Veröffentlichungstag und Bekanntmachung des Hinweises auf die Patenterteilung:
**14.12.2005 Patentblatt 2005/50**

(51) Int Cl.[7]: **G02B 9/06**, G02B 13/14, G02B 27/00

(21) Anmeldenummer: **97116318.3**

(22) Anmeldetag: **19.09.1997**

(54) **Zweilinsiger, achromatischer althermalisierter Reimager**

Achromatic, athermalised 2-lens Reimager

Ré-imageur achromatique et athermalisé à deux lentilles

(84) Benannte Vertragsstaaten:
**DE FR GB**

(30) Priorität: **12.10.1996 DE 19642121**

(43) Veröffentlichungstag der Anmeldung:
**06.05.1998 Patentblatt 1998/19**

(73) Patentinhaber: **Carl Zeiss Optronics GmbH
73447 Oberkochen (DE)**

(72) Erfinder: **Ulrich, Wilhelm
73434 Aalen (DE)**

(74) Vertreter: **Gnatzig, Klaus
Carl Zeiss
Patentabteilung
73446 Oberkochen (DE)**

(56) Entgegenhaltungen:
**EP-A- 0 441 206**
**EP-A- 0 532 267**
**EP-A- 0 690 328**
**EP-A- 0 766 113**
**US-A- 5 504 628**

- **PATENT ABSTRACTS OF JAPAN vol. 1998, no. 807, 31. März 1998 (1998-03-31) & JP 09 218087 A (HE HOLDINGS INC DBA HUGHES ELECTRON), 19. August 1997 (1997-08-19)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 840 155 B1

Printed by Jouve, 75001 PARIS (FR)

## Beschreibung

Die Erfindung betrifft einen Reimager, also ein optisches System, welches ein im unendlichen liegendes Objekt über ein Zwischenbild in eine Bildebene abbildet. Dafür sind zwei Sammellinsen das prinzipielle Minimum. Für technische Realisierungen als Optik von Infrarot-Bildaufnahmemeßsystemen sind solche einfachen Systeme mit rein sphärischen Linsen jedoch nicht geeignet.

Eine Lösung mit geeigneter chromatischer und thermischer Korrektur für Wärmebildgeräte im Spektralbereich von ca. 7,5 bis 10,5 μm und nur vier bis fünf Linsen ist aus der nicht vorveröffentlichten Patentanmeldung DE 196 00 336.9 des gleichen Erfinders bekannt, bei der Chalkogenidgläser und Asphären vorgesehen sind.

Aus US 5,044,706 ist ein Teleskop, geeignet für den gleichen Einsatz, bekannt. Mit vier Linsen für das weite Sehfeld ist ein Zwischenbild vorhanden, also ein Reimager gegeben. Mit nur zwei Linsen davon ist ein Teleskop ohne Zwischenbild realisiert. Die Frontlinsen weisen beide auf verschiedenen Seiten eine Asphäre und eine diffraktive Kinoform-Fläche auf. Zur Athermalisierung ist nichts ausgesagt.

EP 0532 267 offenbart einen weiteren Reimager.

Aufgabe der Erfindung ist die Bereitstellung eines Reimagers, der Achromasie und Athermalisierung, sowie eine Bildqualität bietet, wie sie für Wärmebildgeräte erforderlich ist, und der dabei eine minimale Zahl optischer Elemente aufweist.

Gelöst wird die Aufgabe mit einem zweilinsigen achrathermen Reimager nach Anspruch 1.

Es wurde also gefunden, daß die prinzipiell notwendige Zahl von zwei Linsen auch für technisch brauchbare Reimager genügt. Die Unteransprüche 2 bis 9 zeigen vorteilhafte Ausführungen. In Ergänzung zu asphärischen Flächen - je eine pro Linse - können diffraktive Flächen genutzt werden, die bevorzugt als Feinstruktur den Asphären überlagert werden. So ist pro Element nur eine Fläche besonders zu behandeln und kann z.B. insgesamt durch Feindrehen bearbeitet werden. Die Materialauswahl ist auch bedeutend, hier sind Chalkogenidgläser und Zinksulfid vorteilhaft, wobei vorzugsweise beide Linsen aus dem gleichen Material bestehen.

Die Zeichnung gibt Ausführungsbeispiele an, anhand derer die Erfindung näher erläutert wird. Es zeigen:

Fig. 1 den Linsenschnitt eines ersten Beispiels ohne diffraktive Elemente;

Fig. 2 die Beugungs-Modulationstransferfunktion dazu für verschiedene Bildhöhen;

Fig. 3 den Linsenschnitt eines zweiten Beispiels mit einem diffraktiven Element;

Fig. 4a die Beugungs-Modulationstransferfunktion dazu für verschiedene Bildhöhen, für K = 3,0;

Fig. 4b die Beugungs-Modulationstransferfuktion dazu für verschiedene Bildhöhen, für K = 1,5;

Fig. 5 den Linsenschnitt eines dritten Beispiels mit zwei diffraktiven Elementen;

Fig. 6a die Beugungs-Modulationstransferfunktion dazu für verschiedene Bildhöhen, für K = 3,0;

Fig. 6b die Beugungs-Modulationstransferfuktion dazu für verschiedene Bildhöhen, für K = 1,5;

Fig. 7 den Linsenschnitt eines vierten Beispiels mit zwei diffraktiven Elementen;

Fig. 8 die Beugungs-Modulationstransferfunktion dazu für verschiedene Bildhöhen.

Der Reimager der Figur 1 mit den Linsenflächen 1, 2, 3 und 4 und der Bildebene 7 hat die Konstruktionsdaten der Tabelle 1. Die Flächen 5 und 6 begrenzen eine Planplatte aus Germanium, wie sie als Abschluß der üblichen gekühlten Infrarotdetektoren regelmäßig vorgesehen ist. Sie ist bei der optischen Konstruktion daher einzubeziehen. Die beiden Linsen mit den Flächen 1, 2 bzw. 3, 4 bestehen aus dem Chalkogenidglas IG6 der Firma Vitron Spezialwerkstoffe GmbH, Jena.

Die beiden Vorderflächen 1, 3 sind asphärisch ausgeführt. Einer sphärischen Fläche mit dem Radius R wird eine rotationssymmetrische, asphärische Deformation überlagert. Diese wird als Pfeilhöhendifferenz pD der Asphäre zur sphärischen Fläche angegeben und ist eine Funktion des Abstandes h von der optischen Achse. Die Kegelschnittgrundform ist bei allen Beispielen eine Parabel, so daß sich mit den asphärischen Konstanten $c_1$ bis $c_n$ folgende Formel ergibt:

$$pD(h) = (1/2R)\ h^2 + c_1\ h^4 + ... + c_n\ h^{2n+2}.$$

Der Reimager nach Figur 1 und Tabelle 1 ist angepaßt an die Anforderungen in einem Wärmebildgerät. Die Eintrittspupille liegt vor dem System, so daß dort der übliche Scanner angeordnet werden kann. Die Austrittspupille liegt 8,000 mm vor der Bildebene am Ort der Aperturblende, die als Wärmeschild für die gekühlten Detektoren üblich ist.
Für eine spektrale Bandbreite von 7,5 µm bis 10,5 µm mit der Mittenwellenlänge 9,0 µm und dem Temperaturbereich -40°C bis +70°C ist der Reimager achratherm, das heißt, die chromatische Längsabweichung CHL und die thermische Bildlagen-Variation Δs' liegen innerhalb der beugungsbegrenzten Schärfentiefe des Reimagers.

Konkret ist

CHL (7,5 µm) = -60 µm

CHL (10, 5 µm) = +65 µm

s'(Δ T = +50°) = -39 µm mit Aluminium-Fassung

s' (Δ T =+ 50°) = -17 µm mit Titan-Fassung

Dabei beträgt der Farbquerfehler (CHV)

CHV (7,5 µm) = -0,18 %

CHV (10,5 µm) = +0,20 %

in Prozent der Bildhöhe
und die thermische Brennweitenvariation beträgt

Δ f'(Δ T = +50°C)/f'(20°) = -0,44 % mit Aluminium-Fassung

Δ f' (Δ T = +50°C)/f'(20°) = -0,22 % mit Titan-Fassung.

Begrenzender Fehler ist die chromatische Längsabweichung CHL.
Figur 2 zeigt dazu die Modulationstransferfunktion MTF für die Öffnungszahl K = 3,0 mit Gleichgewichtung aller Wellenlängen von 7,5 µm bis 10,5 µm für tangentiale (T) und radiale (R) Richtung und für Strahlhöhen von 0,0; 0,5; 0,5; 0,7; 1 mal dem Feldradius (F). Hier sieht man ein hervorragendes Korrekturergebnis. Bei der vollen Öffnung von K = 1,5 ist jedoch ein deutlicher MTF-Verlust gegeben.
Für die gleichen Einbaubedingungen ist das Beispiel der Figur 3 und Tabelle 2 gebaut. Die Linsenflächen 32 und 34, jeweils rückseitig, sind sphärisch. Die Vorderflächen 31 und 33 sind asphärisch. Die Fläche 33 ist zugleich mit konzentrischen Ringen als diffraktives optisches Element (DOE) ausgebildet: Wenn einer sphärischen oder asphärischen Fläche eine rotationssymmetrische Phasenfunktion überlagert wird, läßt sich diese Deformation wie folgt definieren und beschreiben:
Das überlagerte Furchenprofil ist eine Funktion des Abstandes h von der optischen Achse und wiederholt sich periodisch immer bis zur maximalen Furchentiefe T.
Der diffraktive Abtrag pD(h) wird für die Ausführungsbeispiele folgendermaßen berechnet:

pD(h) = T · (N(h) - Integer N(h), mit der

- maximalen Furchentiefe: T = WL/(n-1)
- und der Furchenzahl: $N(h) = D_1\ (h^2)/WL$

Dabei bedeuten:

- WL = Blazewellenlänge: hier WL = 9 µm
- n = Brechzahl der Linse
- $D_1$ = diffraktive Konstante

Dafür sind die Konstanten in Tabelle 2 angegeben.

Gegenüber der Variante aus Figur 1 wird dadurch die chromatische Längsaberration CHL verbessert, allerdings bei vergrößerter Querabweichung CHV, wie den folgenden Zahlenwerten zu entnehmen ist:

CHL (7,5 µm) = -8 µm

CHL (0,5 µm) = +13 µm

Δ s' (Δ T = +50°) = -39 µm mit Alu-Fassung

Δ s' (Δ T = +50°) = -17 µm mit Titan-Fassung

CHV (7,5 µm) = -0,42 %

CHV (10,5 µm) = +0,44 %

Δ f' (Δ T = +50°)/f20° = -0,44 % mit Alu-Fassung

Δ f'(Δ T = +50°)/f20° = -0,22 % mit Titan-Fassung

Figur 4a gibt in einer der Figur 2 entsprechenden Darstellung hierfür die Modulationstransferfunktion bei K = 3,0 und Figur 4b bei K = 1,5.

Figur 5 und Tabelle 3 sowie die MTF der Figuren 6a, 6b gehören zu einem dritten Ausführungsbeispiel mit zwei asphärischen Flächen 51 und 53, denen beiden eine diffraktive Struktur überlagert ist. Die Rückflächen 52 und 54 sind wieder sphärisch, das Glas ist IG6 wie bei beiden vorausgehenden Beispielen und eine Germanium-Planplatte 55, 56 ist vorgesehen. In der Objektebene 57 ergeben sich folgende chromatische und thermische Restfehler:

CHL (7,5 µm) = +3 µm

CHL (10,5 µm) = +2 µm

Δ s' (Δ T = +50°) = -39 µm mit Alu-Fassung

Δ s' (Δ T = +50°) = -17 µm mit Titan-Fassung

CHV (7,5 µm) = 0,0 %

CHV (10, 5 µm) = 0,0%

$$\Delta f'(\Delta T = +50°)/f'20° = -0,44\ \%\ \text{mit Alu-Fassung}$$

$$\Delta f'(\Delta T = +50°)/f'20° = -0,22\ \%\ \text{mit Titan-Fassung}$$

Durch die zweite diffraktive Fläche 51 ist nun auch die CHV hervorragend und beste Achromasie ist erreicht. Die MTF-Kurven bei K = 3,0 (Fig. 6a) und K = 1,5 (Fig. 6b) zeigen beugungsbegrenzte Korrektion bis fast in die Bildecke.

Eine weitere Variante nach Figur 7, Tabelle 4, verzichtet auf das Chalkogenidglas IG6 und verwendet das gebräuchlichere Material ZnS für die Linsen 71/72 und 73/74, wobei wieder die Frontflächen 71, 73 asphärisch und diffraktiv ausgebildet sind.

Diese Lösung ist allerdings nicht so gut athermalisiert wie die IG6-Varianten. Ab K = 2,5 als Apertur reicht die Qualität aber aus:

$$\text{CHL}\ (7,5\ \mu m) = +40\ \mu m$$

$$\text{CHL}\ (10,5\ \mu m) = +52\ \mu m$$

$$\Delta s'(\Delta T = +50°) = -79\ \mu m\ \text{mit Alu-Fassung}$$

$$\Delta s'(\Delta T = +50°) = -55\ \mu m\ \text{mit Titan-Fassung}$$

$$\text{CHV}\ (7,5\ \mu m) = +0,04\ \%$$

$$\text{CHV}\ (1.0,\ 5\ \mu m) = +0,10\ \%$$

$$\Delta f'(\Delta T = +50°)/f20° = -0,90\ \%\ \text{mit Alu-Fassung}$$

$$\Delta f'(\Delta T = +50°)/f20° = -0,67\ \%\ \text{mit Titan-Fassung}$$

Die MTF-Kurve Fig. 8 zeigt beugungsbegrenzte Korrektion bei K = 3,0.

Es wurde also gezeigt, daß achratherme Reimager mit nur zwei Linsen erfindungsgemäß in vielen Varianten in brauchbarer Ausführung bereitgestellt werden können.

TABELLE 1

(Fig. 1)

| Radius R [mm] | | Dicke [mm] | Glas |
|---|---|---|---|
| | Objekt | 53,858 | |
| 1 | 22,627 | 3,250 | IG6 |
| Asphäre: $c_1 = 0,57143 \cdot 10^{-5}$ $c_2 = 0,57601 \cdot 10^{-8}$ | | | |
| 2 | 36,088 | 26,796 | |
| | Zwischenbild | 29,146 | |
| 3 | 13,228 | 2,900 | IG6 |
| Asphäre: $c_1 = 0,43329 \cdot 10^{-5}$ $c_2 = 0,25826 \cdot 10^{-6}$ $c_3 = -0,37092 \cdot 10^{-8}$ | | | |
| 4 | 48,5297 | 2,300 | |
| 5 | | 1,000 | Ge |
| 6 | | 10,750 | |

TABELLE 1 (fortgesetzt)

| (Fig. 1) | | | |
|---|---|---|---|
| Radius R [mm] | | Dicke [mm] | Glas |
| 7 | Bild | | |

TABELLE 2

| (Fig. 3) | | | |
|---|---|---|---|
| Radius R [mm] | | Dicke [mm] | Glas |
| | Objekt | 53,500 | |
| 31 | 22,882 | 3,250 | IG6 |
| Asphäre: $c_1 = 0{,}5461 \cdot 10^{-5}$ $c_2 = 0{,}5228 \cdot 10^{-8}$ | | | |
| 32 | 36,921 | 26,758 | |
| | Zwischenbildebene Z | 29,407 | |
| 33 | 13,403 | 2,900 | IG6 |
| Asphäre: $c_1 = 8{,}7681 \cdot 10^{-6}$ $c_2 = 7{,}1551 \cdot 10^{-8}$ $c_3 = -8{,}2006 \cdot 10^{-10}$ $D_1 = -0{,}7128 \cdot 10^{-3}$ $T = 5{,}06\ \mu m$ | | | |
| 34 | 47,453 | 2,434 | |
| 35 | ∞ | 1,000 | Ge |
| 36 | ∞ | 10,750 | |
| 37 | Bild | | |

TABELLE 3

| (Fig. 5) | | | |
|---|---|---|---|
| Radius R [mm] | | Dicke [mm] | Glas |
| | Objekt | 53,500 | |
| 51 | 21,872 | 3,250 | IG6 |
| Asphäre: $c_1 = 0{,}6536 \cdot 10^{-5}$ $c_2 = 0{,}6825 \cdot 10^{-8}$ $D_1 = -0{,}2260 \cdot 10^{-3}$ $T = 5{,}06\ \mu m$ | | | |
| 52 | 34,097 | 26,113 | |
| Zwischenbildebene Z | | 29,643 | |
| 53 | 13,676 | 2,900 | IG6 |
| Asphäre: $c_1 = 0{,}8233 \cdot 10^{-5}$ $c_2 = 0{,}5213 \cdot 10^{-7}$ $c_3 = -0{,}5358 \cdot 10^{-9}$ $D_1 = -0{,}6181 \cdot 10^{-3}$ $T = 5{,}06\ \mu m$ | | | |
| 54 | 48,738 | 2,844 | |
| 55 | ∞ | 1,000 | Ge |
| 56 | ∞ | 10,750 | |
| 57 | Bild | | |

TABELLE 4

| (Fig. 7) | | | |
|---|---|---|---|
| Radius R [mm] | | Dicke [mm] | Glas |
| | Objekt | 58,828 | |
| 71 | 21,222 | 3,250 | ZnS |

TABELLE 4 (fortgesetzt)

| (Fig. 7) | | | |
|---|---|---|---|
| Radius R [mm] | | Dicke [mm] | Glas |
| Asphäre: $c_1 = 0{,}3515 \cdot 10^{-5}$ $c_2 = 0{,}1232 \cdot 10^{-7}$ $c_3 = -0{,}3178 \cdot 10^{-10}$ $D_1 = -0{,}1486 \cdot 10^{-2}$ T = 7,42 µm | | | |
| 72 | 52,005 | 23,476 | |
| Zwischenbildebene Z | | 26,608 | |
| 73 | 12,589 | 2,900 | ZnS |
| Asphäre: $c_1 = -0{,}1543 \cdot 10^{-4}$ $c_2 = 0{,}1617 \cdot 10^{-7}$ $c_3 = -0{,}6583 \cdot 10^{-9}$ $D_1 = -0{,}3774 \cdot 10^{-2}$ T = 7,42 µm | | | |
| 74 | 608,750 | 3,188 | |
| 75 | ∞ | 1,000 | Ge |
| 76 | ∞ | 10,750 | |
| 77 | Bild | | |

**Patentansprüche**

1. Achromatischer und athermaler Reimager zur Abbildung eines im Unendlichen liegenden Objekts über ein Zwischenbild in eine Bildebene,

   - bei dem die chromatische Längsabweichung für eine spektrale Bandbreite von 7,5 - 10,5 µm innerhalb der beugungsbegrenzten Schärfentiefe liegt, und

   - die thermische Bildlagenvariation über einen Temperaturbereich von mehr als ± 30°, vorzugsweise von mehr als ± 50°, ebenfalls innerhalb der Schärfentiefe liegt.

   - wobei der Reimager aus genau zwei positiven Linsen besteht, pro Linse genau eine Fläche (1, 3; 31, 33; 51, 53; 71, 73) asphärisch ausgebildet ist und

     a.) beide Linsen (1, 2, 3, 4) aus dem selben Material Chalkogenidglas bestehen, oder
     b.) beide Linsen (1, 2, 3, 4) aus dem selben Material Zinksulfid bestehen oder,
     c.) eine Linse aus Chalkogenidglas und die andere Linse aus Zinksulfid besteht.

2. Reimager nach Anspruch 1, **dadurch gekennzeichnet, dass** pro Linse genau eine Fläche (1, 3; 31, 33; 51, 53; 71, 73) diffraktiv ausgebildet ist.

3. Reimager nach Anspruch 1, **dadurch gekennzeichnet, dass** pro Linse genau eine Fläche (1, 3; 31, 33; 51, 53, 71, 73) asphärisch und diffraktiv ausgebildet ist.

4. Reimager nach mindestens einem der Ansprüche 1 bis 3, **dadurch gekennzeichnet, dass** beide Linsen refraktive Flächen aufweisen. (Fig. 1)

5. Reimager nach mindestens einem der Ansprüche 1 bis 3, **dadurch gekennzeichnet, dass** genau eine diffraktive Fläche (31) vorhanden ist. (Fig. 3)

6. Reimager nach mindestens einem der Ansprüche 1 - bis 3, **dadurch gekennzeichnet, dass** zwei diffraktive Flächen (51, 53; 71, 73) vorhanden sind. (Fig. 5, 7)

7. Reimager nach Anspruch 5 oder Anspruch 6, **dadurch gekennzeichnet, dass** jede diffraktive Fläche einer asphärischen Fläche überlagert ist.

8. Reimager nach mindestens einem der Ansprüche 5 - 7, **dadurch gekennzeichnet, dass** eine diffraktive Fläche (31) eine zur optischen Achse rotationssymmetrische diffraktive Struktur aufweist.

**9.** Reimager nach Anspruch 8, **dadurch gekennzeichnet, dass** die diffraktive Struktur vom Kinoform-Typ ist.

## Claims

**1.** Achromatic and athermal reimager for imaging an object lying at infinity into an image plane via an intermediate image,

- in the case of which the chromatic longitudinal deviation for a spectral bandwidth of 7.5 - 10.5 µm lies within the diffraction-limited depth of focus, and

- the thermal variation in image position over a temperature range of more than ±30°, preferably of more than ±50°, likewise lies within the depth of focus,

- the reimager comprising exactly two positive lenses, one surface (1, 3; 31, 33; 51, 53; 71, 73) per lens being of aspheric design, and

    a.) both lenses (1, 2, 3, 4) consisting of the same material of chalkogenide glass, or
    b.) both lenses (1, 2, 3, 4) consisting of the same material of zinc sulphide, or
    c.) one lens consisting of chalkogenide glass and the other lens of zinc sulphide.

**2.** Reimager according to Claim 1, **characterized in that** exactly one surface (1, 3; 31, 33; 51, 53; 71, 73) per lens is of diffractive design.

**3.** Reimager according to Claim 1, **characterized in that** exactly one surface (1, 3; 31, 33; 51, 53, 71, 73) per lens is of aspheric and diffractive design.

**4.** Reimager according to at least one of Claims 1 to 3, **characterized in that** both lenses have refractive surfaces. (Figure 1)

**5.** Reimager according to at least one of Claims 1 to 3, **characterized in that** exactly one diffractive surface (31) is present. (Figure 3)

**6.** Reimager according to at least one of Claims 1 - 3, **characterized in that** two diffractive surfaces (51, 53; 71, 73) are present. (Figures 5 and 7)

**7.** Reimager according to Claim 5 or Claim 6, **characterized in that** each diffractive surface is superimposed on an aspheric surface.

**8.** Reimager according to at least one of Claims 5 - 7, **characterized in that** one refractive surface (31) has a diffractive structure which is rotation symmetrical about the optical axis.

**9.** Reimager according to Claim 8, **characterized in that** the diffractive structure is of the kinoform type.

## Revendications

**1.** Ré-imageur achromatique et athermal pour la reproduction d'un objet se trouvant à l'infini par une image intermédiaire dans un plan image,

- dans lequel la déviation longitudinale chromatique pour une largeur de bande spectrale de 7,5 - 10,5 µm se situe à l'intérieur de la profondeur de champ limitée par diffraction, et
- la variation thermique de la position de l'image sur un domaine de température de plus de ± 30°, de préférence de plus de ± 50°, se situe également à l'intérieur de la profondeur de champ,
- dans lequel le ré-imageur se compose exactement de deux lentilles positives, par lentille exactement une face (1, 3; 31, 33; 51, 53; 71, 73) est de forme asphérique et

a) les deux lentilles (1, 2, 3, 4) sont constituées de la même matière de verre de chalcogénure, ou
b) les deux lentilles (1, 2, 3, 4) sont constituées de la même matière de sulfure de zinc, ou
c) une lentille est constituée de verre de chalcogénure et l'autre lentille est constituée de sulfure de zinc.

**2.** Ré-imageur selon la revendication 1, **caractérisé en ce que** par lentille exactement une face (1, 3; 31, 33; 51, 53; 71, 73) est diffractive.

**3.** Ré-imageur selon la revendication 1, **caractérisé en ce que** par lentille exactement une face (1, 3; 31, 33; 51, 53; 71, 73) est asphérique et diffractive.

**4.** Ré-imageur selon au moins l'une quelconque des revendications 1 à 3, **caractérisé en ce que** les deux lentilles présentent des faces réfractives (Fig. 1).

**5.** Ré-imageur selon au moins l'une quelconque des revendications 1 à 3, **caractérisé en ce qu'**il y a exactement une face diffractive (31) (Fig. 3).

**6.** Ré-imageur selon au moins l'une quelconque des revendications 1 à 3, **caractérisé en ce qu'**il y a deux faces diffractives (51, 53; 71, 73) (Fig. 5, 7).

**7.** Ré-imageur selon la revendication 5 ou la revendication 6, **caractérisé en ce que** chaque face diffractive est superposée à une face asphérique.

**8.** Ré-imageur selon au moins l'une quelconque des revendications 5 - 7, **caractérisé en ce qu'**une face diffractive (31) présente une structure diffractive ayant la symétrie de révolution par rapport à l'axe optique.

**9.** Ré-imageur selon la revendication 8, **caractérisé en ce que** la structure diffractive est du type cinématographique.

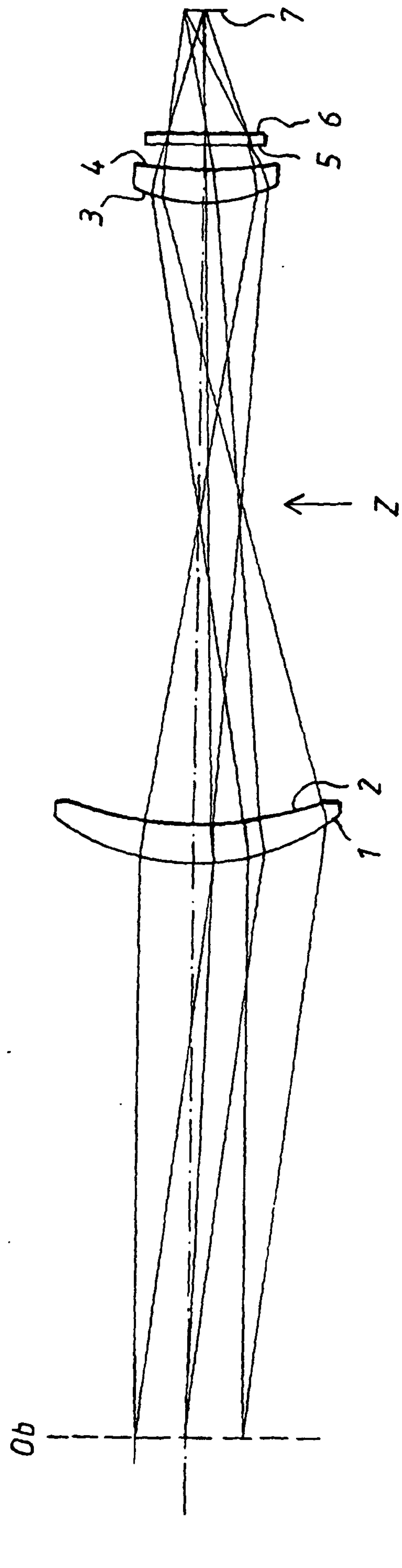


FIG. 1

FIG. 2

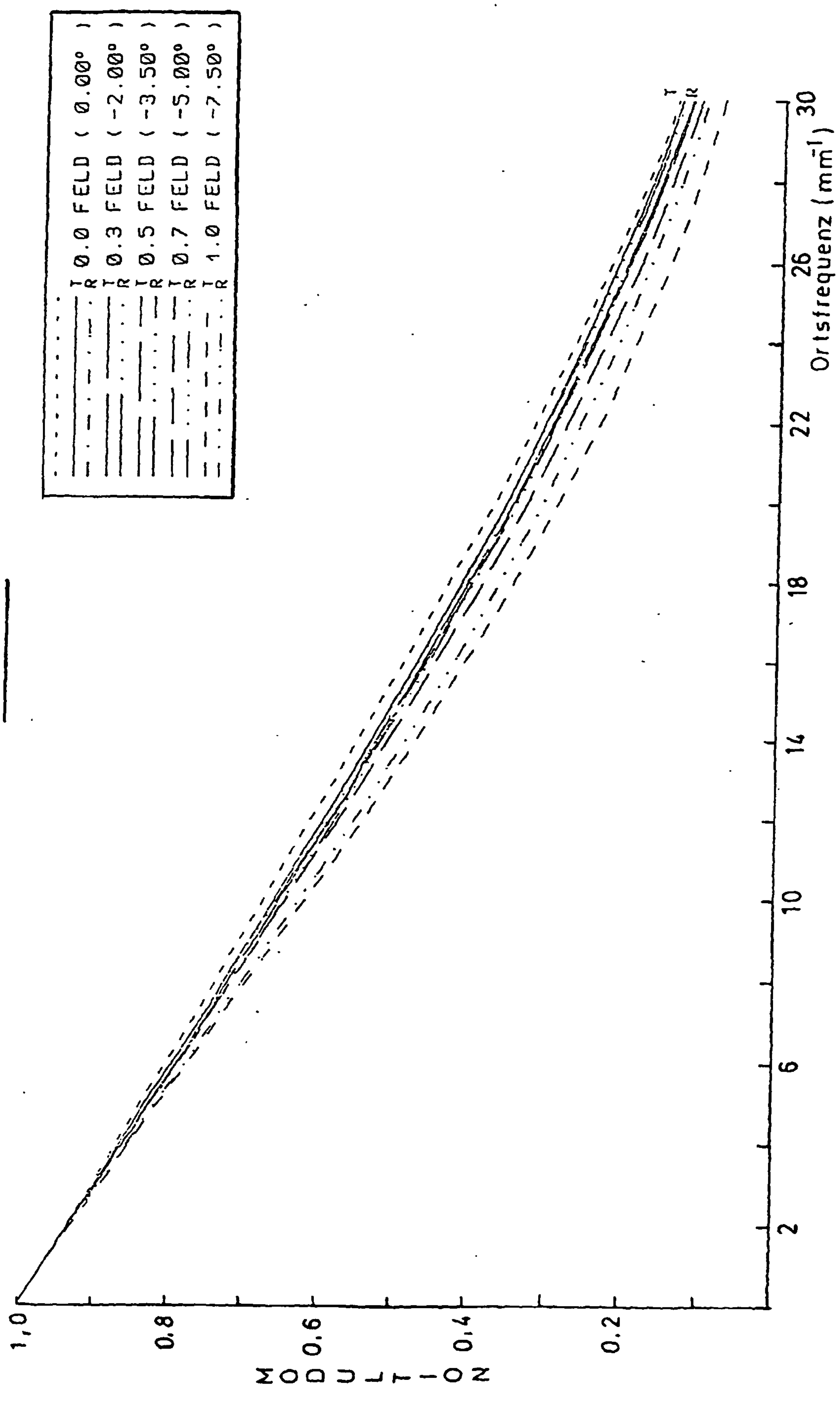

T 0.0 FELD ( 0.00° )
R
T 0.3 FELD ( -2.00° )
R
T 0.5 FELD ( -3.50° )
R
T 0.7 FELD ( -5.00° )
R
T 1.0 FELD ( -7.50° )
R
MODULATION
1,0
0.8
0.6
0,4
0.2
2
6
10
14
18
22
26
30
Ortsfrequenz (mm⁻¹)
T
R

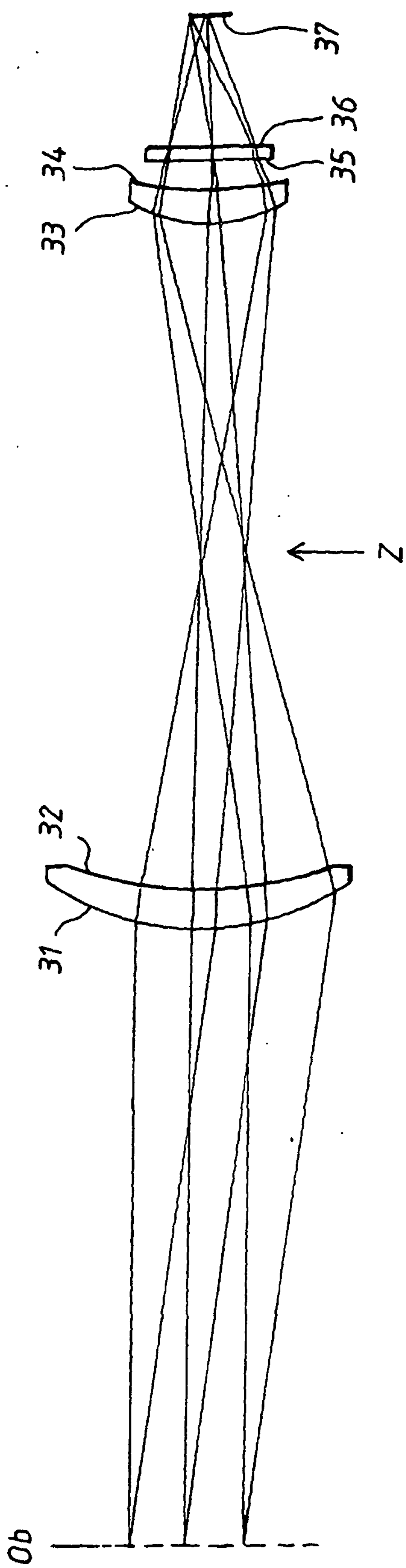


FIG. 3

FIG. 4a

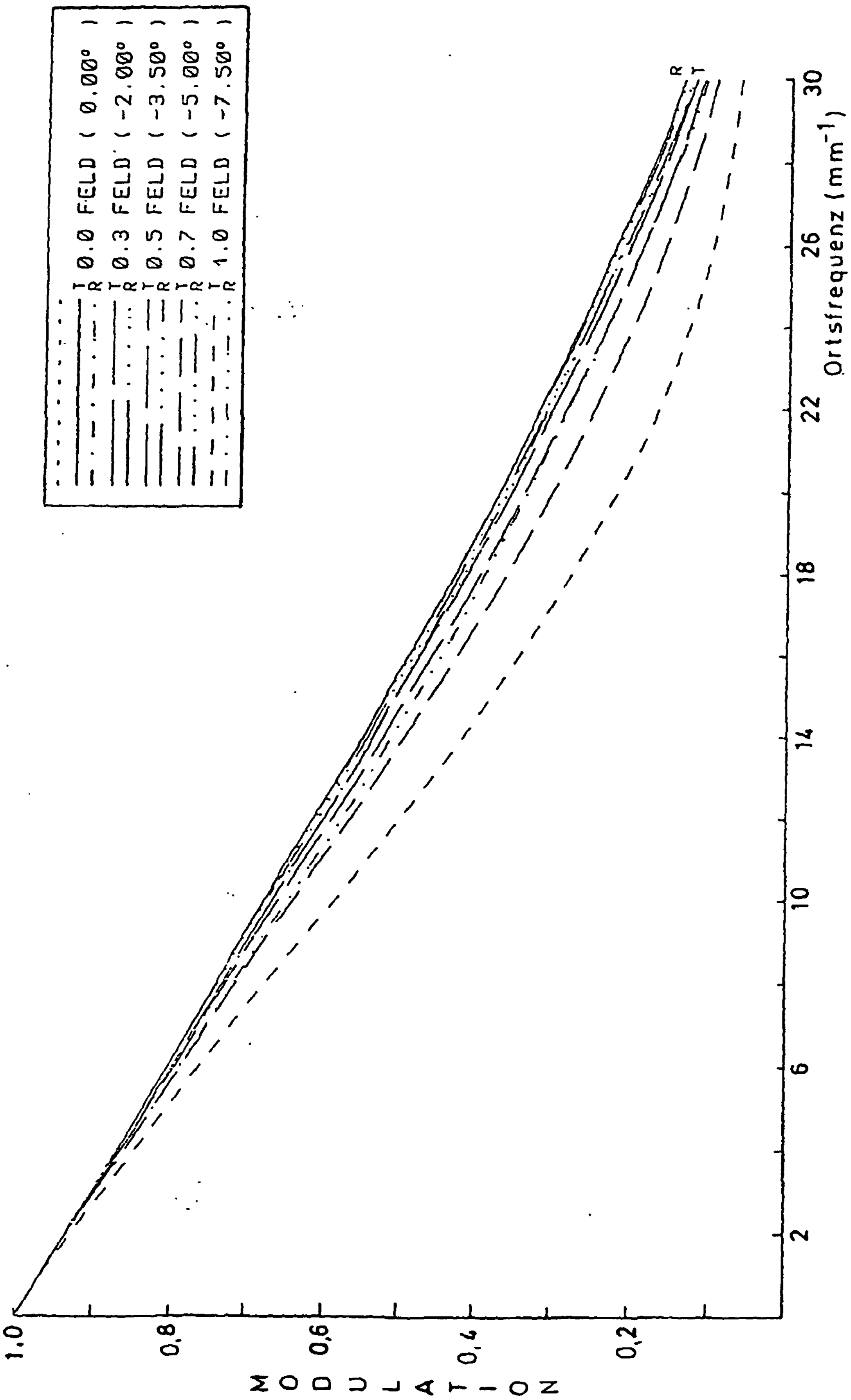
T 0.0 FELD ( 0.00° )
R
T 0.3 FELD ( -2.00° )
R
T 0.5 FELD ( -3.50° )
R
T 0.7 FELD ( -5.00° )
R
T 1.0 FELD ( -7.50° )
R
MODULATION
1.0
0,8
0,6
0,4
0,2
2
6
10
14
18
22
26
30
Ortsfrequenz (mm$^{-1}$)

FIG. 4b

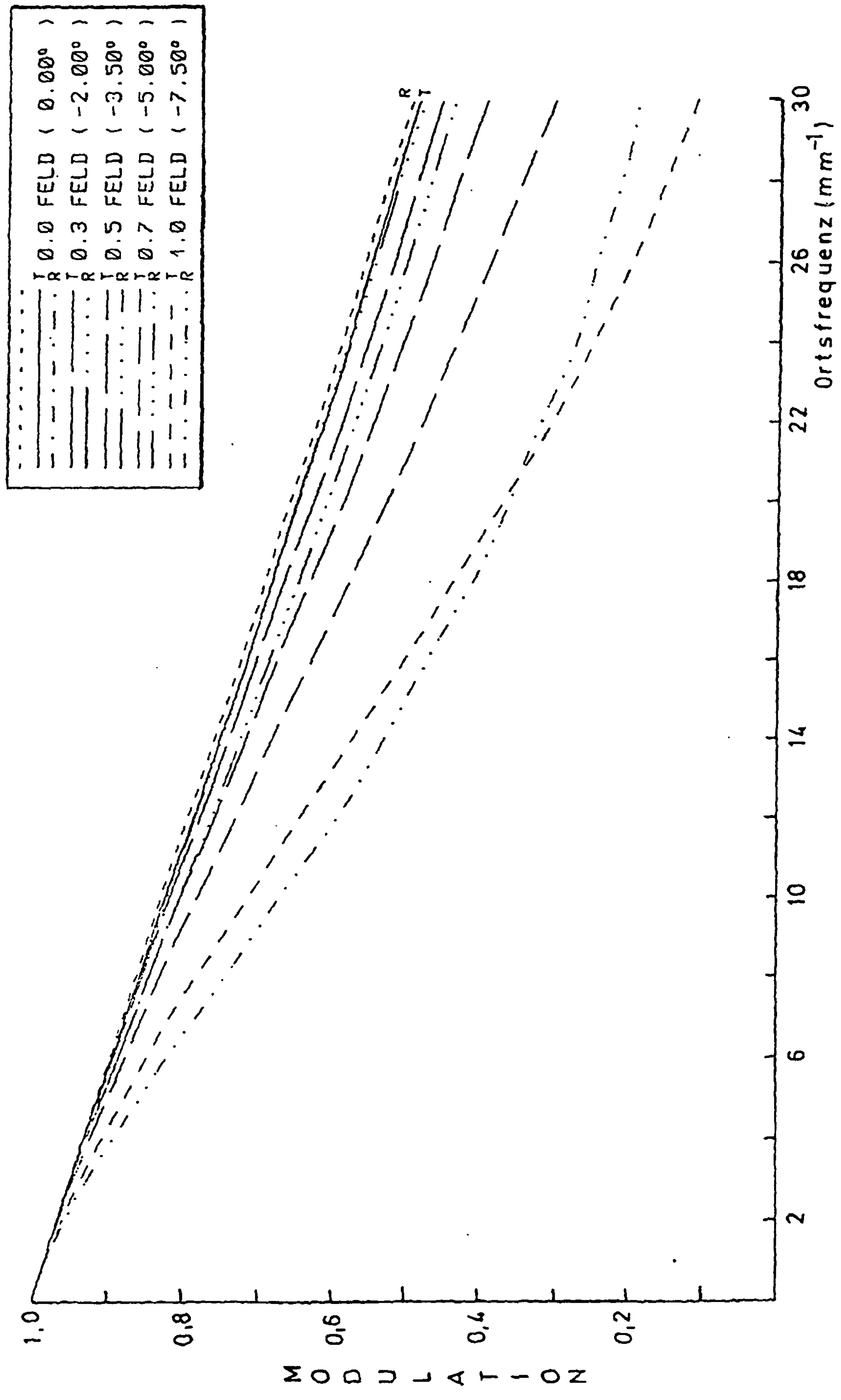
T 0.0 FELD ( 0.00° )
R
T 0.3 FELD ( -2.00° )
R
T 0.5 FELD ( -3.50° )
R
T 0.7 FELD ( -5.00° )
R
T 1.0 FELD ( -7.50° )
R
MODULATION
1,0
0,8
0,6
0,4
0,2
2
6
10
14
18
22
26
30
Ortsfrequenz (mm⁻¹)

FIG. 5

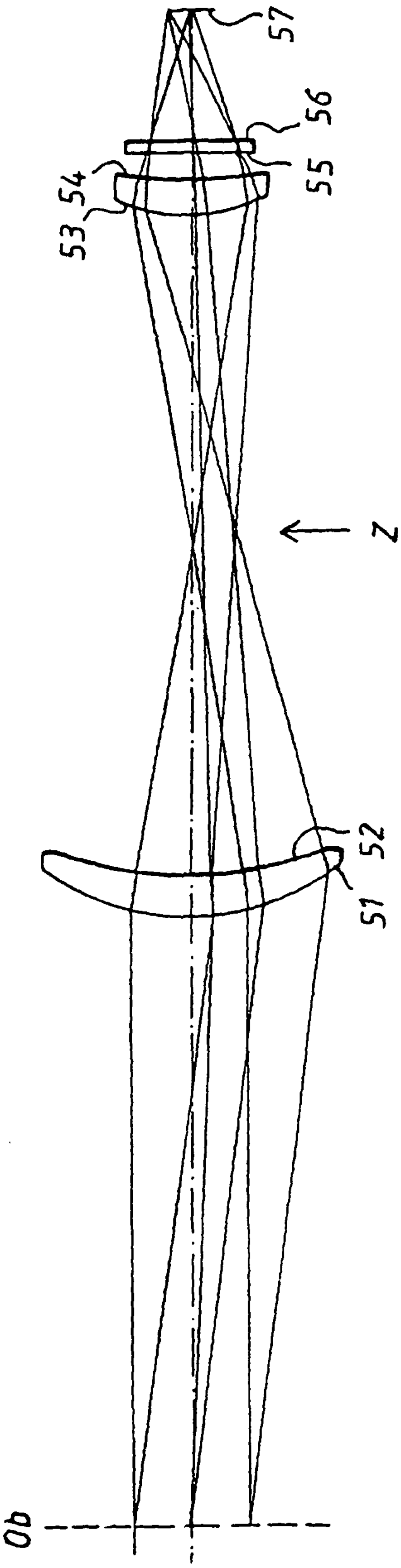

FIG. 6a

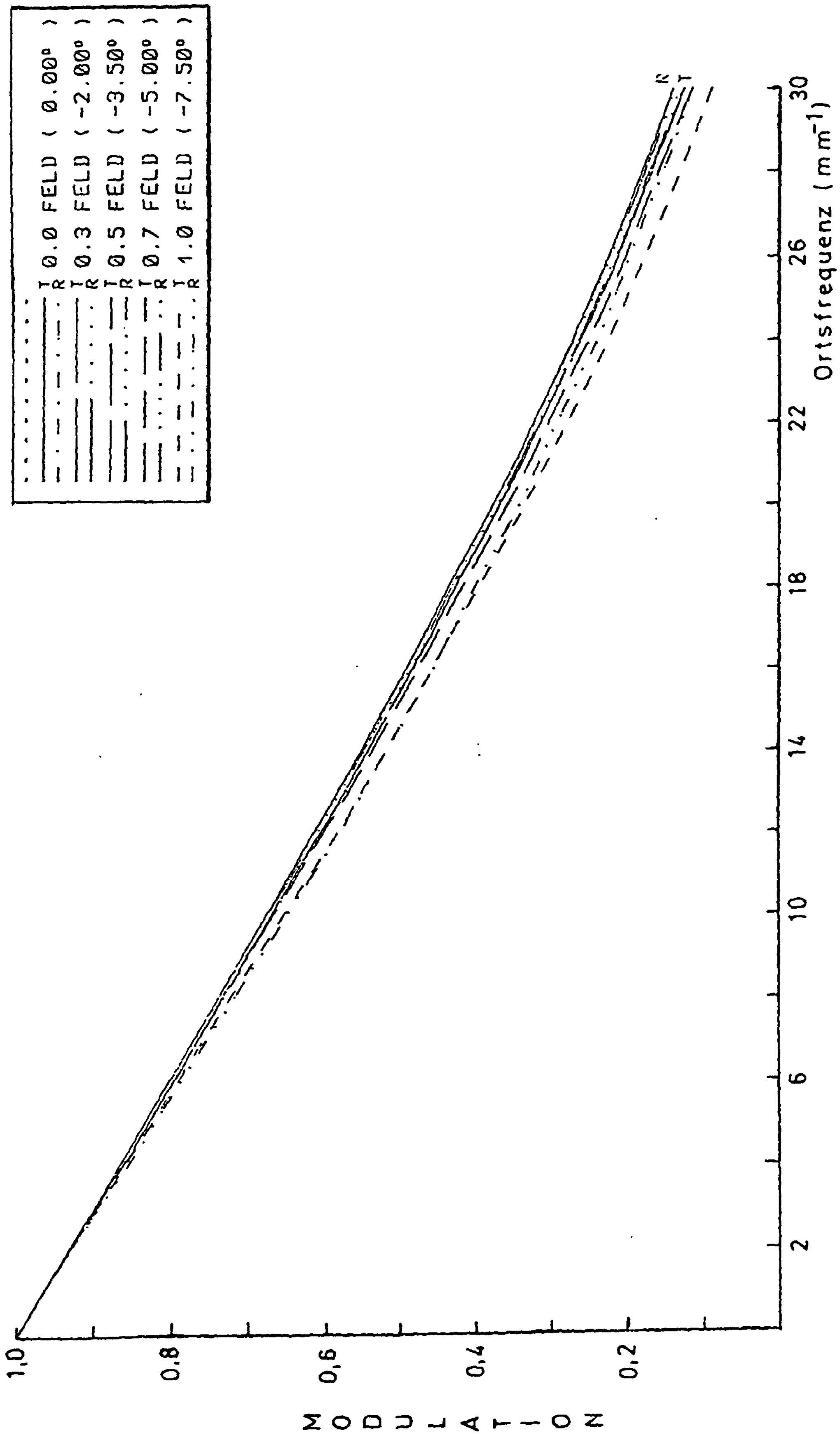
T 0.0 FELD ( 0.00° )
R
T 0.3 FELD ( -2.00° )
R
T 0.5 FELD ( -3.50° )
R
T 0.7 FELD ( -5.00° )
R
T 1.0 FELD ( -7.50° )
R
MODULATION
1,0
0,8
0,6
0,4
0,2
2
6
10
14
18
22
26
30
Ortsfrequenz (mm⁻¹)

FIG. 6b

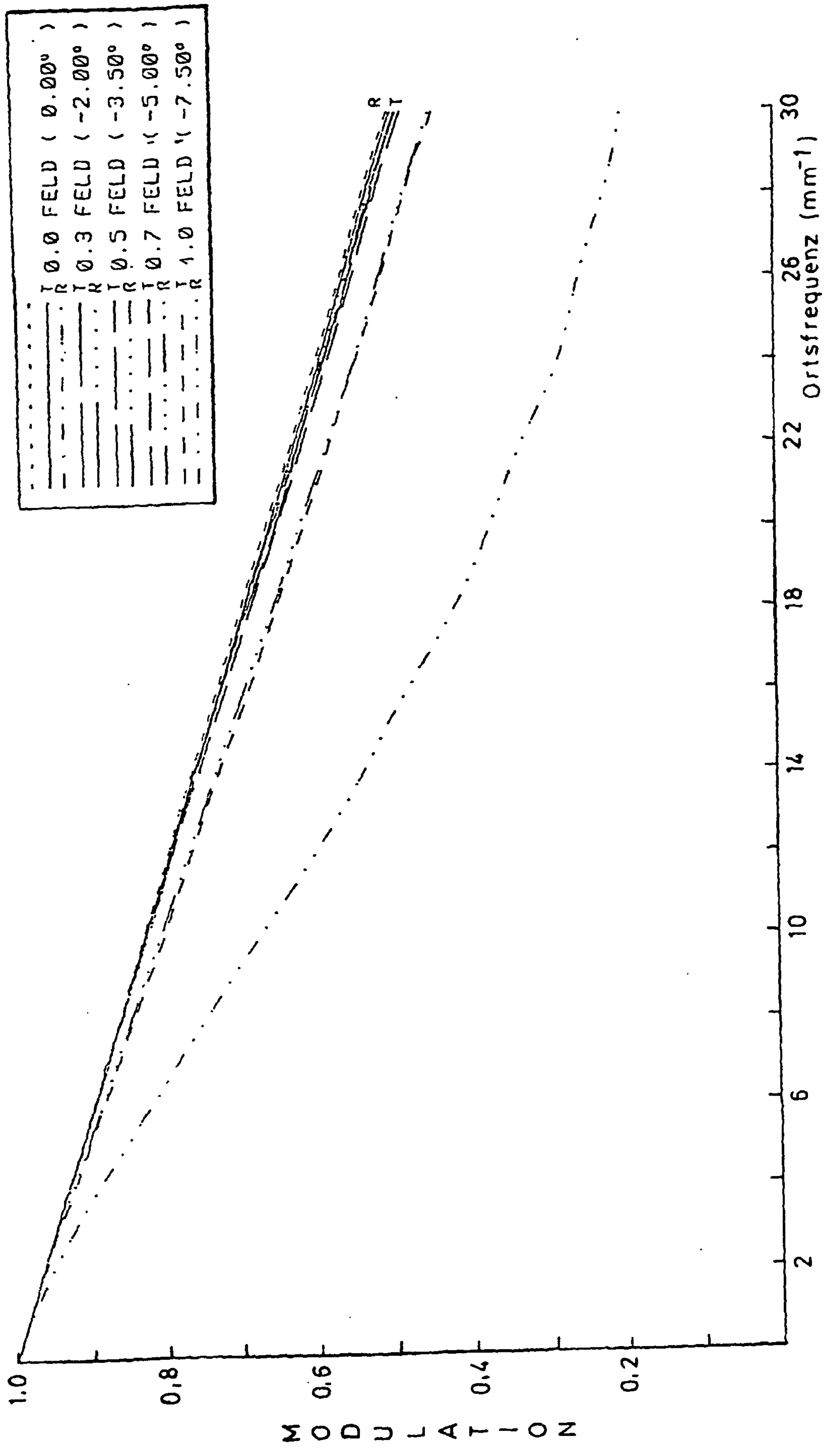
T 0.0 FELD ( 0.00° )
R
T 0.3 FELD ( -2.00° )
R
T 0.5 FELD ( -3.50° )
R
T 0.7 FELD ( -5.00° )
R
T 1.0 FELD ( -7.50° )
R
R
T
1.0
0,8
0,6
0,4
0.2
MODULATION
2
6
10
14
18
22
26
30
Ortsfrequenz (mm-1)

FIG.7

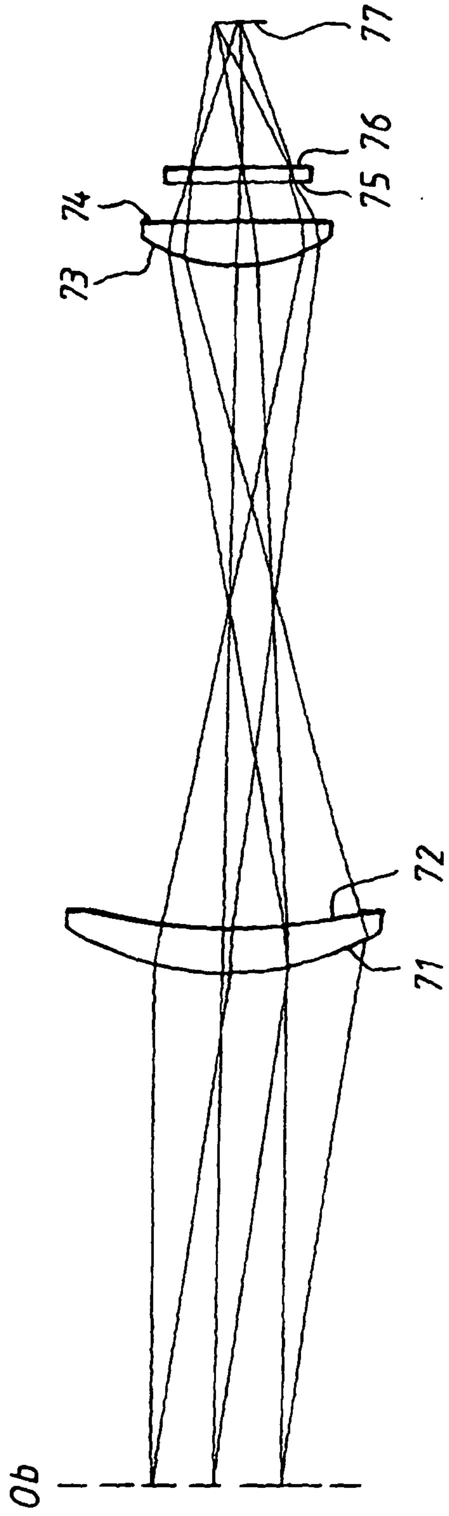

FIG. 8

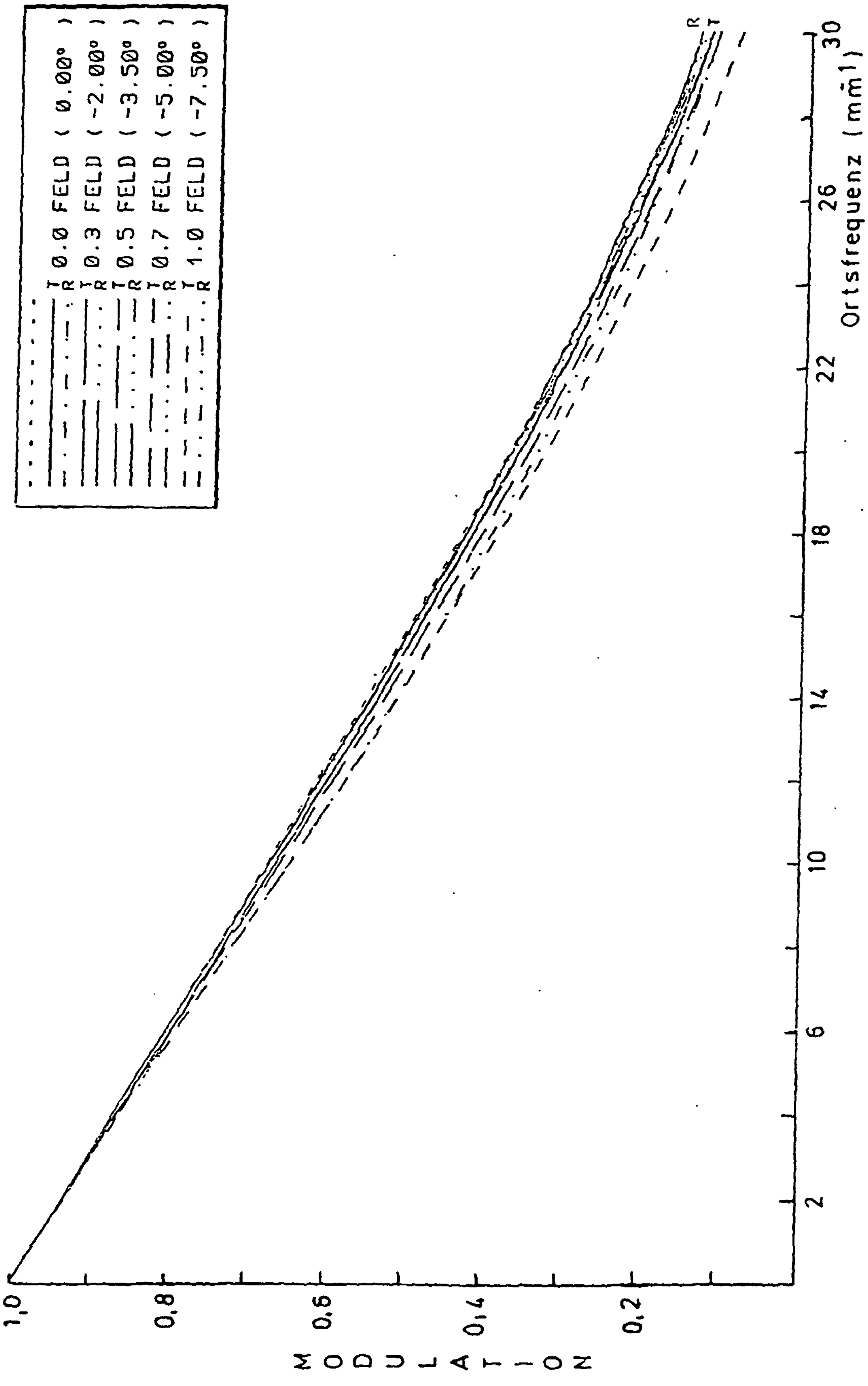
T 0.0 FELD ( 0.00° )
R 0.3 FELD ( -2.00° )
T
R 0.5 FELD ( -3.50° )
T
R 0.7 FELD ( -5.00° )
T
R 1.0 FELD ( -7.50° )
MODULATION
1,0
0,8
0,6
0,4
0,2
2
6
10
14
18
22
26
30
Ortsfrequenz (mm⁻¹)
R
T